# EUROPEAN PATENT SPECIFICATION

(11) **EP 2 041 880 B1**
(45) Date of publication and mention of the grant of the patent: **23.02.2011**
(21) Application number: 06821315.6
(22) Date of filing: 11.07.2006
(51) Int. Cl.: H04B 1/16, B60C 23/00

(54) **RECEIVER FOR RECEIVING AT LEAST TWO TYPES OF SIGNALS, DATA COMMUNICATION SYSTEM AND VEHICLE INCLUDING A RECEIVER.**
EMPFÄNGER ZUM EMPFANGEN VON MINDESTENS ZWEI ARTEN VON SIGNALEN, DATENKOMMUNIKATIONSSYSTEM UND FAHRZEUG MIT SOLCH EINEM EMPFÄNGER
RÉCEPTEUR DESTINÉ À RECEVOIR AU MOINS DEUX TYPES DE SIGNAUX, SYSTÈME DE COMMUNICATION DE DONNÉES ET VÉHICULE ÉQUIPÉ DU RÉCEPTEUR

(43) Date of publication of application: 01.04.2009
(73) Proprietor: Freescale Semiconductor, Inc., Austin, TX 78735 (US)
(72) Inventor: GAUTHIER, Laurent, F-31500 Toulouse (FR); ASSIER, Christian, F-31470 Fontenilles (FR)
(74) Representative: Ferro, Frodo Nunes
(86) International application number: PCT/IB2006/054092
(87) International publication number: WO 2008/020273

(56) References cited:
- EP-A- 1 119 190
- EP-A- 1 388 936
- EP-A- 1 655 872
- WO-A-88/06385
- WO-A-02/071608
- US-A1- 5 555 276
- US-A1- 2005 153 730
- US-A1- 2005 207 478

## Description

### Field of the invention

This invention relates to a receiver. The invention further relates to a data communication system and to a vehicle. The invention further relates to a kit for controlling a receiver.

### Background of the invention

Receivers able to receive two or more different types of signals are known. For example, receivers for mobile telephones are known which are able to receive signals in different frequency bands. The receiver is able to receive a first type of radio signals at 900 MHz, which is commonly used in mobile telephone systems in Europe and Asia, in a first mode and in a second mode is able to receive a second type of radio signals at 850 MHz, which is commonly used in mobile telephone systems in the Americas. The receiver includes a first circuit suitable for the first type of signal and a second circuit suitable for the second type of signal. The first circuit and the second circuit are both connected to the antenna of the mobile phone. Depending on the receiver mode, the received signal is respectively processed through the first circuit or the second circuit. A disadvantage of this receiver is that it has a relatively large footprint, has a relatively high power consumption and is expensive because the receiver includes a separate circuit for each mode.

Also, receivers for automotive applications are known which can receive both signals both from a remote keyless entry device and from a tire pressure monitoring system. The receiver is connected to a microcontroller which periodically reconfigures the receiver, depending on the type of signal to be received. More in particular, in order to receive the signals from a remote keyless entry device, the receiver is configured to be in an On/Off Keying (OOK) mode and to receive the signals from the tyre pressure control system, the receiver is configured to be in a frequency shift keying mode (FSK). However, a disadvantage of this receiver is that the microcontroller consumes a relatively high amount of power when configuring the receiver.

EP 1119190 A1 discloses a decoder for a television which can receive data streams from cable, satellite or terrestrial sources. The decoder comprises a memory in which tables of parameters of the decoder are stored for the different types of transmission media. To configure the decoder, a microprocessor controls parameters of receiver circuitry based on a measured carrier frequency of the signal received and the information stored in the memory.

EP1655872 A1 discloses a receiver for mobile communication. The receiver includes a wireless scheme parameter storing unit configured to store a plurality of characteristics of multiple wireless schemes. The receiver further has a wireless scheme estimation unit configured to estimate one of the characteristics of a currently used wireless scheme from a received signal and select one of the wireless schemes corresponding to the estimated characteristic from the wireless scheme parameter storing unit, and a demodulator configured to demodulate the received signal based on the selected wireless scheme. The estimation and selection are performed in a hierarchical manner.

### Summary of the invention

The present invention provides a receiver as described in claim 1. Furthermore, the invention provides a data communication system as described in the claim 9. The invention also provides a vehicle as described in the claim 13. The invention provides a kit for controlling a receiver according to claim 14.

Specific embodiments of the invention are set forth in the dependent claims.

These and other aspects of the invention will be apparent from and elucidated, by way of example only, with reference to the embodiments described hereinafter.

### Brief description of the drawings

Further details, aspects and embodiments of the invention will be described, by way of example only, with reference to the drawings.
FIG. 1 schematically shows a block diagram of an example of a receiver in accordance with an embodiment of the invention.
FIG. 2 schematically shows a block diagram of an example of a remote key control which can cooperate with the example of FIG. 1.
FIG. 3 schematically shows an example of a vehicle in accordance with an embodiment of the invention.
FIG. 4 schematically shows an example of a timing diagram which can be used in the example of FIG. 1.

### Detailed description of the preferred embodiments

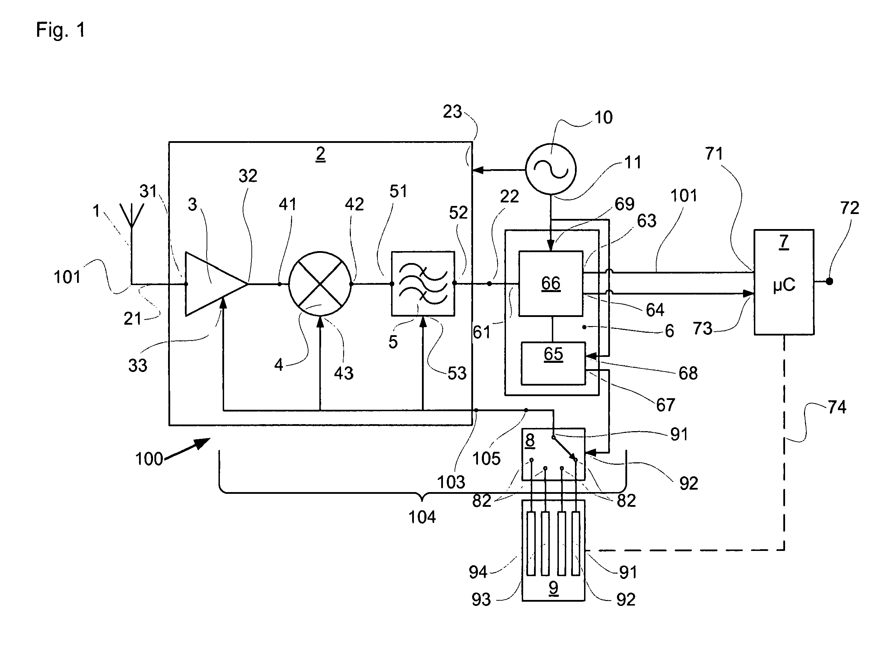

The example of a receiver 100 shown in FIG. 1 is able to receive at least two types of signals. The receiver 100 may for example have different modes in which different types of signals can be received. For example, in a first mode the receiver 100 may be able to receive a first type of signal and in a second mode, to receive a second type of signal. The receiver 100 shown in FIG. 1 includes a receiver input 101; a signal converter 2 and a receiver output 102. In this example, a converter input 21 of the signal converter 2 is connected to the receiver input 101. A converter output 22 is connected to the receiver output 102.

A receiver input signal can be received at the receiver input 101. In the example of FIG. 1, for instance, the receiver input 101 is connected to an antenna 1. The antenna 1 can receive an electromagnetic signal propagating in a suitable propagation medium, for example air, and convert the electromagnetic signal in a signal suitable to be processed by the receiver, for example into an electric signal. The electric signal may then be inputted in the receiver 100 via the receiver input 101.

After being received at the receiver input 101, the receiver input signal is transmitted to the converter input 21. The convert 2 converts the receiver input signal into a receiver output signal. The receiver output signal is of a type suitable to be processed by devices connected to the receiver output 22. For example, the converter 2 may convert the frequency band of the receiver input signal into a frequency band suitable for a device connected to the receiver output, for instance by demodulating the receiver input signal. The converted signal may then be transmitted, via the converter output 22, to the receiver output 102 and be outputted to a device which, in a signal processing direction, is positioned downstream of the receiver 100.

The receiver 100 may have one or more, three in this example, control inputs 103. The receiver 100 can be set to receive a selected type of signal by setting controllable parameters of the receiver 100 to suitable values via the control input(s) 103.

As shown in FIG. 1, the receiver 100 may include a memory 9. The memory 9 may include two or more, four in this example, memory parts 91-94 in which respective sets of values of receiver control parameters are stored. A selected part 91 of the memory 9 may be connected to the control input 103 via a connection 104. In the example of FIG. 1, the control inputs 103 are connected to the respective memory part 91 via a connection 104 which includes a switch 8 and control outputs 105. The controllable parameters of the receiver 100 are set by the values stored in the respective memory part 91.

As shown in FIG. 1, a switch 8 may be present between the control inputs 103 and the memory parts 91-94. The switch 8 can switch the connection 104 between the memory parts 91-94. In the example of FIG. 1, for instance, the switch 8 has a switch contact 81 at one side connected to the control inputs 103 and a number of switch contacts 82 at an opposite site of the switch 8. Each of the opposite switch contacts 82 is connected to a respective one of memory parts 91-94, e.g. to a respective one of the registers in the example of FIG. 1. The switch 8 can connect the switch contact 81 to a selected one of the opposite switch contacts 82, and thereby enable the connection 104 between the respective memory part 91-94 connected to this opposite switch contact 82 and the control inputs 103 of the receiver 100.

The memory parts may 91-94, as for example shown in FIG.1, be implemented as separate control registers. The control registers may for instance be of non-volatile type, such as an erasable or non-erasable non-volatile memory. For example, as shown in fig. 1 with the dashed line 74, a processor may be connected to the memory parts 91-94 and store suitable sets of parameters when the receiver 100 is initiated. For example, the processor may store suitable sets of parameters each time when the receiver 100 is switched on and/or periodically refresh the stored parameter value once the receiver is switched on. The processor 7 may, with regard to the selection of the set, be inactive between respective refreshing of the memory 9. That is, the set of parameter values may be selected without control of the processor 7. Thereby, the load on the processor 7 may be reduced and hence power consumption may be reduced as well.

For example, the processor 7 may refresh the stored sets of parameter values when the selected set has changed a predetermined number of times or after a predetermined period of time has lapsed. The predetermined period of time between refreshing the memory 9 may for example be a larger than the period of time a set is selected. The period between refreshing the memory 9 may for example be a multiple of the period of time a set is selected

In the example of FIG. 1, each set of parameters is stored in a separate control register. Thereby, the switch 8 may be of a simple type. However, the memory 9 may also be implemented as a single register which includes separate locations for each set of parameter values and, for example, include an access table which contains information about the location at which a set is stored.

As shown in FIG. 1, the receiver 100 may include a receiver controller 6 connected to the switch 8. The receiver controller 6 may select a type of signal to be received by the receiver 100 and control the switch 8 to switch the connection 104 to a memory part 91-94 in which the set of values for the receiver control parameters is stored which corresponds to the selected signal type. In FIG. 1, for instance, the receiver controller 6 includes a switch controller 65 which is connected with a control output 67 to a switch control input 83, via which the state of the switch 8 can be controlled. In FIG. 1, the receiver 100 is shown in a mode in which the receiver controller 6 has controlled the switch 8 to be in the state in which the set of parameters in a first memory part 91 is selected. However, it will be apparent that the receiver controller 6 may control the switch 8 to select another memory part 92-94.

The switch 9 and the receiver controller 6 enable an automatic control of the mode of the receiver 100 in simple manner; by switching the connection 104 to be connected to a memory part 91-94 in with the set of values suitable for the selected type of signal are stored. Accordingly, the need for a microprocessor to set the parameters of the receiver each time the receiver mode has to be changed is obviated, and the power consumption may be reduced. Furthermore, compared to a dedicated circuit for each mode of the receiver 100, the amount of components may be reduced, and accordingly the footprint and power consumption of the receiver may be reduced. Also, the receiver controller 6 may be of a simple type, and may for example be implemented an edge triggered bistable (also known in the art as a flip-flop).

The signal converter 2 may include any type of device suitable to convert the receiver input signal into the receiver output signal. For instance, the signal converter 2 may include one or more of the group consisting of: amplifiers, demodulators, filters. In the example of FIG. 1, the signal converter 2 includes an amplifier 3 downstream of the receiver input 21. A demodulator 4 is provided downstream of the amplifier 3 and upstream of a filter 5. In the example of FIG. 1, the amplifier 3 is connected with an amplifier input 31 to the receiver input 21 and with an amplifier output 32 to a demodulator input 41. The demodulator 4 is connected with a demodulator output 42 to a filter input 51 and the filter 5 is connected with a filter output 52 to the converter output 22. In operation, the amplifier 3 amplifies the receiver input signal and outputs an amplified signal to the demodulator 4. The demodulator 4 demodulates the amplified signal and outputs the demodulated signal to the filter 5. The filter 5 removes not desired frequency components from the demodulated signal. For instance in the example of FIG. 1, the filter 5 is a band-pass filter and removes frequency components both with a frequency above a band-pass frequency range and with a frequency below the band-pass frequency range. The filter 5 outputs a filtered signal to the converter output 22.

In the example of FIG. 1, an amplifier control input 33 is connected to the selected memory part (memory part 91 in FIG. 1), via the control input 103 and the connection 104. A demodulator control input 43 is connected to the selected memory part 91, via the control input 103 and the connection 104. A filter control input 53 is connected to the selected memory part 91 via the control input 103 and the connection 104. The respective components of the converter 2 are thus controlled by the parameter values stored in the selected memory part 91, and by switching to another one of the memory parts 92-94, the components (e.g. in FIG. 1 amplifier 3, demodulator 4 and filter 5) can be adjusted to receive another type of signal.

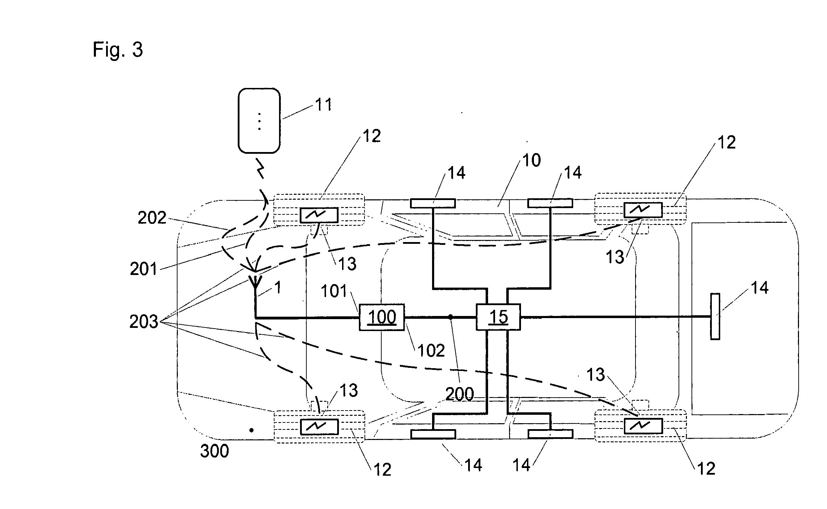

The receiver 100 may be connected to further circuitry. For instance, the receiver 100 may be connectable, via the receiver output 102 to a signal processing unit connected to the receiver output. The signal converter 2 may be arranged to convert the receiver input signal into a receiver output signal suitable to be processed by a selected type of signal processor. For instance, as show in the example of FIG. 1, a processor input 71 of a signal processor 7 may be connected to the receiver output. The signal processor 7 may, for example, be arranged to receive (via the receiver 100), data and process the data. Other devices may be connected to a processor output 72 of the signal processor 7, for example actuators, such as door lock actuators, as is explained below with reference to the example of *FIG. 3, and control those devices based on the data.

The receiver 100 may include a signal detector. For instance, the receiver controller 6 of the example shown in FIG. 1 includes a signal detector 66, which is arranged to detect the presence of signals of the selected type. A signal input 61 of the receiver controller 6 is connected to the converter output 22. The signal detector 66 may be connectable to a signal processor 7. In the example of FIG. 1, for instance, a signal output 63 of the receiver controller 6 is connected to a processor input 71 of the processor 7 and a control output 64 of the receiver controller 6 is connected to a processor control input 73. The signal detector 66 can receive the signal outputted at the converter output 22 from the signal input 61 and detect whether or not the selected type of signal is present at the converter output 22.

The signal detector 66 may switch the signal processor 7 based on the result of the detection. For example, the signal detector 66 may switch the signal processor 7 from an inactive state to an active state in case signals of the selected type are detected. In case the signals of the selected type are not detected, the signal processor 7, after a predetermined period of time, may turn itself from the active state into the inactive state, or in case the signal processor 7 is already inactive, maintain the inactive state. Thereby, the power consumption may be reduced, since the signal processor is only active, and hence consumes power, in case the desired type of signal is received.

The signal detector 66 may for example detect the signals by comparing a type of source identification for the selected signal type with identification data of the source of the signal represented by the received signal, and hence determining whether the source of the signal corresponds to the signal type selected to be received. However, the signal detector 66 may also detect the signals in another manner and, for example, determine whether or not signals are received in a predetermined frequency range corresponding to the type of signal selected to be received.

The connection 104 may be switched by the switch 8, controlled by the switch controller 65, in any manner suitable to receive the selected type of signals. For instance, the switch controller 65 may control the switch 8 to connect the control input 103 to a selected memory part 91-94, in order to set the receiver 100 in a first mode in which a first type of signal can be received. The signal detector 66 may then determine whether or not a signal of the first type is present in the received signal. In case the presence is not determined within a predetermined period of time, the switch controller 65 may control the switch 8 to connect another selected memory part 91-94 to the control inputs 103, in order to turn the receiver 100 in a second mode in which a second type of signal can be received and the signal detector 66 may determine whether or not a signal of a second type is present in the received signal. Thereby, the receiver can be switched automatically, for example to find a signal from a source which transmits signals via two or more data channels. Accordingly, the reliability of receiving signals from that source may be improved.

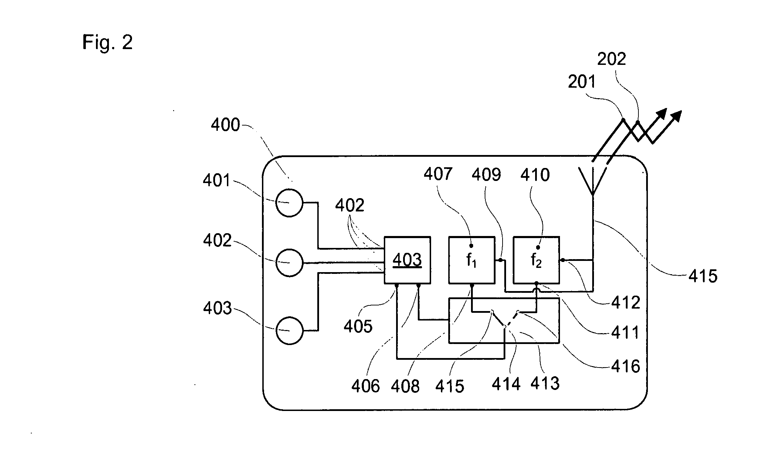

For instance in FIG. 2 an example of a source, in this example a door lock remote control 11, is shown. The door lock remote control 11 includes buttons 401 by means of which a user can open or close door locks, for example of a vehicle. The buttons 401 are connected to inputs 402 of a signal generator 403. The signal generator unit 403 generates, in response to pressing a button by the user, a signal for a door lock system which corresponds to the pressed button 401 (e.g. an unlock doors signal, a lock doors signal or an unlock single door signal). The signal generator 403 transmits the generated signal via a generator output 405 to a switch input 414 of a switch 413. The state of switch 413 is controlled by the signal generator 403, via a control output 406 of the signal generator 403 connected to a control input 408 of the switch 413. The switch 413 has two switch outputs 415,416. Depending on the state of the switch 413, a respective switch output 415,416 is connected to the switch input 414. Each of the switch outputs 415,416 is connected to a modulator 407,410 which modulates the generated signal with a carrier signal of a frequency f₁ or f₂, respectively. The modulated signal is subsequently transmitted to an antenna 415, which is connected to the modulators 407,410 via respective modulator outputs 409,412. The antenna 415 outputs the signal to a data channel 201, 202, in this example a wireless channel, with a carrier frequency of f₁ or f₂ respectively. Accordingly, depending on the state of the switch 413, the generated signal is transmitted either over the data channel 201 at the first frequency f₁, via a first modulator 407 or over the second data channel 202 at the second frequency f₁, via the second modulator 410. Thereby, in case for example the first data channel 201 is blocked or jammed, for example because other sources are using the same frequency, the signals can still be transmitted, that is via the second data channel 202.

For example, for short range connectivity applications, for example with a maximum distance between the source and receiver of less than 500 meters, such as 200 meters, for example less than 20 meters, several devices may be using the same frequency band. For example, different remote key controls for car locks or for garage doors may use the same frequency band or other electronic devices may use the frequency band used by a remote key control. Hence, at the receiving side of the data channels 201,202, the reliability of receiving signals from a source may be improved by switching the receiver mode between different data channels to receive signals from the same source, while the need to provide separate circuitry for both data channels 201,202 is obviated. Accordingly, the complexity, footprint and/or power consumption of the receiver may be reduced while reliability of reception may be improved.

The signal detector 66 may further be connected to the receiver 100, and switch parts of the receiver 100 between active and inactive, depending on the result of the detection, which may further reduce power consumption.

For example, the receiver 100 may be switched periodically from a mode to another mode, each mode having a predetermined duration. In case no signals of the type corresponding to a mode are detected, the signal detector 66 may switch the receiver 100, or at least a part of the receiver 100, off for the remaining part of the period of time during which the receiver is in a certain mode. The receiver 100 may for example be switch after a period of time in the range between 0 and 1 seconds, such as after 0.1 second or less, for example 1 millisecond or less.

The receiver 100 may include a timer 10, which periodically switches at least a part of the receiver 100, for example from an active state to an inactive state or vice versa. In the example of FIG. 1, for instance, the timer 10 is connected to an on/off control 23 of the controller 2. The timer 10 is further connected with a timer output 11 to control inputs 68, 69 of the signal detector 66 and the switch controller 65 respectively. In this example, the switch controller 65 may for example control the switch 8 such that alternately different memory parts 91-94 are selected, and hence the receiver 100 alternates between modes. In addition, the timer 10 may provide to the signal detector 66 information about a duration of a mode, and for example, thereby enable the signal detector 66 to switch the signal processor 7 and/or respective parts of the receiver 100 on before a transmission of signals can be expected. This may for example be used in systems where sources periodically transmit signals to a receiver, and may provide reliability of the reception of signals since this may reduce the chance that the signal processor and/or the receiver are inactive while signals are presented at the receiver input 101.

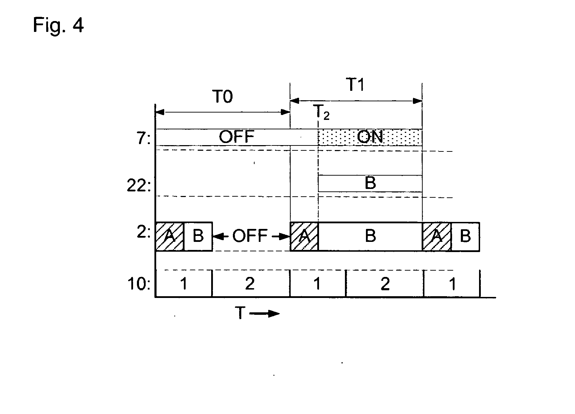

The graph of FIG. 4 illustrates an example of operation of the receiver 100. In FIG. 4, two cycles T0, T1 of operating the receiver 100 are illustrated. As can be seen in FIG. 4, the timer 10 may output a first timer signal 1 which controls the converter 2 to be active and a second timer signal 2 which controls the converter 2 to be inactive. The timer 10 may further output the timer signals 1 and 2 to the receiver controller 6, which when the first timer signal 1 is received, controls the switch 8 to switch between two memory parts, resulting the receiver 100 being in a mode A or in mode B. As shown in FIG. 4, when no signals are received (and hence no signal is presented at the converter output 22), the signal detector 66 controls the signal processor 7 to be inactive (denoted with 'OFF' in FIG. 4). ). When, shown in FIG. 4 in the second cycle T1, a signal of the selected type, in mode B in FIG. 4, is received, at time T₂, the signal detector 66 switches the signal processor 7 to the active state (denoted with ON' in FIG. 4).

The sets of values of controllable receiver parameters may relate to any suitable type of signals. For example a first set of parameters may be suitable for signals originating from a first type of source, and a second set of parameters may be suitable for signals originating from a second type of source. For instance, as shown in FIG. 3, the first source may be a vehicle door lock remote control 11, and the second source may be a tire pressure sensor system 13. Also, for example, the sources may be devices monitoring physical parameters of an individual, such as for example heart rate and energy consumption. Also, the source may for instance be in a building, and together with the receiver be a part of : a security system, a Heating, Ventilation and Air Conditioning (HVAC) system, a metering reading system, a lighting control system or an access control system. However, the sources may also be of other types.

The receiver 100 may be incorporated in a data communication system. FIG. 3 shows an example of a data communication system 200. In addition to a receiver 100, the data communication system may include two or more, three in FIG. 3, data channels 201-203. In the example, the data channels 201-203 are wireless data channels. The data channels 201-203 connect respective sources, in the example a door lock remote control 11 and tyre pressure sensor systems 13, to the receiver 100. Connected to the receiver 100, is a signal processor 15, in this example a door lock controller 15. The door lock controller 15 is connected to the receiver output 102, and can process signals from the door lock control data channels 201,202 when selected. For example, the door lock controller 15 may check the source of the signals to correspond to the vehicle 300 and open the lock or lock the door depending on the received signal.

The example of a data communication system 200 shown in FIG.3 is incorporated in a vehicle 300. In this example, the vehicle 300 is a motor vehicle and more in particular a car, provided with the data communication system includes tyres 12 provided with a tyre pressure sensor system 13. The tyre pressure sensor systems 13 can sense the pressure of a tyre, and transmit signals representing the measured pressure to the receiver 100. The receiver 100 may receive the signals and transmit, for example, the received signals to a visual interface, in order to enable an occupant of the vehicle 300 to perceive the measured tyre pressure or transmit the received signal, to a tyre pressure monitoring unit which may, e.g., determine whether or not the sensed pressure is to low. In the example of FIG. 4, the doors of the vehicle 300 are provided with lock actuators 14, which are connected to the door lock controller 15. When the door lock remote control 11 transmits a signal, the door lock controller 15 receives the signal, via the receiver 100, and controls the actuators 14 to actuate the door locks correspondingly. Hence, the locks of the vehicle doors can be controlled via the door lock remote control 11.

The invention may be implemented as a kit for controlling a receiver. Such a kit may include a memory 9 with a first memory part 91-94 in which a first set of receiver control parameters values for said receiver 100 can be stored and a second memory part 91-94 in which a second set of receiver control parameters values for said receiver 100 can be stored. The kit may further include one or more control outputs 105 connectable to a control input 103 of the receiver 100, to form a connection 104 which connects a selected memory part 91 to the control input 104, via which connection 104 at least one receiver parameter of said receiver 100 may be controlled corresponding to a value stored in said selected memory part 91. The kit may further have a switch 8 connectable between said control input 103 and said memory parts 91-94, for switching the connection 104 from said selected memory part 91 to another memory part 92-94 and a controller 6 connectable to said switch 8, for selecting a set and controlling said switch 8 to switch said connection 104 to a memory part 91-94 corresponding to the selected set. The kit may be provided as a set of separate components which can be connected to each other to assemble a control module, or may be provided as an assembled module of components connected to each other in a suitable manner.

In the foregoing specification, the invention has been described with reference to specific examples of embodiments of the invention. It will, however, be evident that various modifications and changes may be made therein without departing from the broader spirit and scope of the invention as set forth in the appended claims. For example, the set of parameter values may be suitable for any type of mode. For example the sets of a parameter values may enable the receiver to receive in a first mode signals at a frequency modulated with a first type of modulation, and in the second mode signals at that frequency modulated with a second type of modulation. Also, for instance the sets of a parameter values may enable the receiver to receive in a first mode signals at a first frequency and in the second mode signals at a second frequency. However, other parameter values may also differ between the sets. For instance, in the memory any parameter value suitable to set the receiver to a selected type of signal may stored, such as for instance parameter values related to the frequency, baud rate, modulation, the ID of a source of the signal or other suitable type of parameter.

Also, the switch may be implemented as an electrical switch, such as one or more Field Effect Transistors operating in saturation mode, a mechanical switch or any other suitable type of switch.

Furthermore, the receiver may be configured to receive, for examples, signals from a remote control for example of a television, a magnetic or optical recording or reproducing device, such as a DVD player or a video recorder, Also, the receiver may be configured to receive, for examples, signals from a remote garage door control or an alarm. The receiver may for example be used to modify an existing apparatus, such as the garage door opening unit, to be able to receive signals of a different type, for example to enable the apparatus to receive signals at another frequency or to operate at multiple frequencies, thus enabling an increased reliability and/or security.

The receiver may for example be arranged to receive signals in the industrial, scientific and medical (ISM) radio bands; such as the 868 MHz band in Europe, the 915 MHz band in the USA or the 2.4 GHz band.

Also, the invention is not limited to physical devices or units implemented in non-programmable hardware but can also be applied in programmable devices or units able to perform the desired device functions by operating in accordance with suitable program code. Furthermore, the devices may be physically distributed over a number of apparatuses, while functionally operating as a single device. For example, the receiver 100 may be implemented as discrete hardware modules connected to each other to function as the receiver. For example, the receiver may include an integrated circuit which forms the amplifier and is connected to a separate integrated circuit which forms the demodulator.

Also, devices functionally forming separate devices may be integrated in a single physical device. For example, the receiver 100 and the signal processor 7 may be implemented in a single integrated circuit. Thereby, the dimensions of the device can be reduced, while the power consumption of the integrated circuit can be reduced, for example by having the receiver part of the integrated circuit powered to receive the signals, while the signal processor part is inactive and the signal processor part is switched to the active state when the selected type of signal is detected.

However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to advantage.

## Claims

1. A receiver (100) for receiving at least two types of signals in a short range connectivity application, including:
a receiver input (101) for receiving a receiver input signal;
a signal converter (2) connected with a converter input (21) to said receiver input (101), for converting said receiver input signal into a receiver output signal;
a receiver output (102) connected to a converter output (22) of the signal converter (2), for outputting said receiver output signal to a signal processor (7);
at least one control input (103) for controlling at least one controllable parameter of
the receiver (100);
**characterised in that**
said receiver (100) further includes:
a memory (9) including:
a first register (91-94) in which a first set of receiver control parameters values for said receiver (100) are stored and
a second register (91-94) in which a second set of receiver control parameters values for said receiver (100) are stored;
said receiver (100) being able to receive a selected type of signals when said receiver (100) is set in accordance to a selected set;
a connection (104) connecting a selected register (91) to said at least one control input (103), for setting receiver parameters of said receiver (100) to receiver control parameters values stored in said selected register (91);
a switch (8) between said control input (103) and said registers (91-94), for switching the connection (104) from said selected register (91) to another register (92-94); and
a controller (6,65) connected to said switch (8), for, without control of the signal processor, selecting a set and controlling said switch (8) to switch said connection (104) to a register (91-94) corresponding to the selected set.

2. A receiver (100) as claimed in claim 1, wherein said signal converter (2) is arranged to convert said receiver input signal into a receiver output signal suitable to be processed by a selected type of signal processor (7), and, wherein, optionally, said signal converter (2) includes one or more of the group consisting of: amplifier (3), demodulator (4), filter (5).

3. A receiver (100) as claimed in any one of the preceding claims, further including a timer (10) for periodically switching at least a part of the receiver (100) from an active state to an inactive state or vice versa.

4. A receiver (100) as claimed in any one of the preceding claims, wherein said controller (6,65) is arranged to control said switch (8) to periodically switch said connection (104) from a currently selected register (91-94) to another, not selected, register (91-94).

5. A receiver (100) as claimed in any one of the preceding claims, further including a signal detector (66) connected to said signal converter (2), for detecting a presence of signals of the selected type.

6. A receiver (100) as claimed in claim 5, wherein said signal detector (66) is connectable to the signal processor (7), for switching said signal processor (7), and optionally at least a part of the receiver (100), from an inactive state to an active state when said presence of signals of the selected type is detected.

7. A receiver (100) as claimed in any one of the preceding claims, wherein said at least two sets include a first set of values of receiver control parameters suitable for signals originating from a first type of source (11), and a second set of values of receiver control parameters suitable for signals originating from a second type of source (14).

8. A receiver (100) as claimed in any one of the preceding claims, wherein said at least two sets include a first set of values of receiver control parameters suitable for signals originating from a type of source (11) in a first frequency band (f₁) and a second set of values of receiver control parameters suitable for signals originating from the same type of source (11) in a second frequency band (f₂).

9. A data communication system (200) including at least two data channels (201-202) and a receiver (100) as claimed in any one of the preceding claims, which receiver (100) is connected to said data channels (201-203).

10. A data communication system (200) as claimed in claim 9, further including a signal processor (7) connected to the receiver output (102), for processing signals from a selected data channels of said at least two data channels (201-203).

11. A data communication system (200) as claimed in any one of claims 9-10, wherein said data channels (201-203) include:
a first remote vehicle door lock control channel (201) for a first type of signal from a remote vehicle door lock control; and
a second remote vehicle door lock control channel (202) for a second type of signal from said remote vehicle door lock control.

12. A data communication system (200) as claimed in any one of claims 9 or 11, wherein said at least two data channels (201-203) include a remote vehicle door lock control channel (201,202) and a tyre pressure control channel (203).

13. A vehicle (300) provided with a data communication system (200) according to any one of claims 9-12.

14. A kit for controlling a receiver (100) according to any one of claims 1-8, including:
a memory (9) with a first register (91-94) in which a first set of receiver control parameters values for said receiver (100) can be stored and a second register (91-94) in which a second set of receiver control parameters values for said receiver (100) can be stored;
at least one control output connectable to a control input (103) of the receiver (100), to form a connection (104) connecting a selected register (91) to said control input (103) via which at least one receiver parameter of said receiver (100) can be set corresponding to a value stored in said selected register (91);
a switch (8) connectable between said control input (103) and said registers (91-94), for switching the connection (104) from said selected register (91) to another register (92-94); and
a controller (6,65) connectable to said switch (8), for selecting a set and controlling said switch (8) to switch said connection (104) to a register (91-94) corresponding to the selected set.

## Patentansprüche

1. Empfänger (100) zum Empfangen von mindestens zwei Signaltypen in einer Anwendung mit kurzreichweitiger Konnektivität, mit:
einem Empfängereingang (101) zum Empfangen eines Empfängereingangssignals;
einem Signalwandler (2), der mit einem Wandlereingang (21) an den Empfängereingang (101) angeschlossen ist, zum Umwandeln des Empfängereingangssignals in ein Empfängerausgangssignal;
einem Empfängerausgang (102), der an einen Wandlerausgang (22) des Signalwandlers (2) angeschlossen ist, zum Ausgeben des Empfängerausgangssignals an einen Signalprozessor (7);
mindestens einem Steuereingang (103) zum Steuern mindestens eines steuerbaren Parameters des Empfängers (100);
**dadurch gekennzeichnet, dass** der Empfänger (100) weiter aufweist:
einen Speicher (9) mit:
einem ersten Register (91 - 94), in welchem ein erster Satz von Empfängersteuerparameterwerten für den Empfänger (100) gespeichert sind, und
einem zweiten Register (91 - 94), in welchem ein zweiter Satz von Empfängersteuerparameterwerten für den Empfänger (100) gespeichert sind;
wobei der Empfänger (100) imstande ist, einen ausgewählten Signaltyp zu empfangen, wenn der Empfänger (100) in Übereinstimmung mit einem auswählten Satz eingestellt wird;
eine Verbindung (104), die ein ausgewähltes Register (91) an den mindestens einen Steuereingang (103) anschließt, um Empfängerparameter des Empfängers (100) auf Empfängersteuerparameterwerte zu setzen, welche in dem ausgewählten Register (91) gespeichert sind;
einen Schalter (8) zwischen dem Steuereingang (103) und den Registern (91 - 94), um die Verbindung (104) von dem ausgewählten Register (91) auf ein anderes Register (92 - 94) umzuschalten; und
einen an den Schalter (8) angeschlossenen Controller (6,65), der geeignet ist, ohne Steuerung des Signalprozessors einen Satz auszuwählen und den Schalter (8) so zu steuern, dass er die Verbindung (104) an ein Register (91 - 94) schaltet, welches dem ausgewählten Satz entspricht.

2. Empfänger (100) gemäß Anspruch 1, wobei der Signalwandler (2) dazu ausgelegt ist, das Empfängereingangssignal in ein Empfängerausgangssignal umzuwandeln, welches geeignet ist, von einem ausgewählten Signalprozessortyp (7) verarbeitet zu werden, und wobei der Signalwandler (2) optional mindestens ein Element aus der folgenden Gruppe aufweist: Verstärker (3), Demodulator (4), Filter (5).

3. Empfänger (100) gemäß einem der vorhergehenden Ansprüche, weiter mit einem Zeitgeber (10) zum periodischen Umschalten mindestens eines Teils des Empfängers (100) von einem aktiven Zustand in einen inaktiven Zustand oder umgekehrt.

4. Empfänger (100) gemäß einem der vorhergehenden Ansprüche, wobei der Controller (6,65) dazu ausgelegt ist, den Schalter (8) derart zu steuern, dass dieser die Verbindung (104) periodisch von einem gegenwärtig ausgewählten Register (91 - 94) auf ein anderes, nicht ausgewähltes Register (91 - 94) umschaltet.

5. Empfänger (100) gemäß einem der vorhergehenden Ansprüche, weiter mit einem Signaldetektor (66), der an den Signalwandler (2) angeschlossen ist, zum Detektieren eines Vorhandenseins von Signalen des ausgewählten Typs.

6. Empfänger (100) gemäß Anspruch 5, wobei der Signaldetektor (66) an den Signalprozessor (7) anschließbar ist, zum Schalten des Signalprozessors (7), und optional mindestens eines Teils des Empfängers (100), von einem inaktiven Zustand in einen aktiven Zustand, wenn das Vorhandensein von Signalen des ausgewählten Typs detektiert wird.

7. Empfänger (100) gemäß einem der vorhergehenden Ansprüche, wobei die mindestens zwei Sätze enthalten: einen ersten Wertesatz von Empfängersteuerparametern, welcher für Signale geeignet ist, die von einem ersten Quellentyp (11) stammen, und einen zweiten Wertesatz von Empfängersteuerparametern, der für Signale geeignet ist, die von einem zweiten Quellentyp (14) stammen.

8. Empfänger (100) gemäß einem der vorhergehenden Ansprüche, wobei die mindestens zwei Sätze enthalten: einen ersten Wertesatz von Empfängersteuerparametern, der für Signale geeignet ist, die von einem Quellentyp (11) in einem ersten Frequenzband (f₁) stammen, und einen zweiten Wertesatz von Empfängersteuerparametern, der für Signale geeignet ist, die von demselben Quellentyp (11) in einem zweiten Frequenzband (f₂) stammen.

9. Datenkommunikationssystem (200) mit mindestens zwei Datenkanälen (201 - 202) und einem Empfänger (100) gemäß einem der vorhergehenden Ansprüche, wobei der Empfänger (100) an die Datenkanäle (201 - 203) angeschlossen ist.

10. Datenkommunikationssystem (200) gemäß Anspruch 9, weiter mit einem Signalprozessor (7), der an den Empfängereingang (102) angeschlossen ist, zum Verarbeiten von Signalen von einem ausgewählten Datenkanal der mindestens zwei Datenkanäle (201 - 203).

11. Datenkommunikationssystem (200) gemäß einem der Ansprüche 9 bis 10, wobei die Datenkanäle (201 - 203) aufweisen:
einen ersten Fahrzeugtürschloss-Fernsteuerungskanal (201) für einen ersten Typ eines Signals von einer Fahrzeugtürschloss-Fernsteuerung; und
einen zweiten Fahrzeugtürschloss-Fernsteuerungskanal (202) für einen zweiten Typ eines Signals von der Fahrzeugtürschloss-Fernsteuerung.

12. Datenkommunikationssystem (200) gemäß einem der Ansprüche 9 oder 11, wobei die mindestens zwei Datenkanäle (201 - 203) einen Fahrzeugtürschloss-Fernsteuerungskanal (201, 202) und einen Reifendrucksteuerkanal (203) umfassen.

13. Fahrzeug (300) mit einem Datenkommunikationssystem (200) gemäß einem der Ansprüche 9 bis 12.

14. Ein Bausatz oder eine Ausrüstung zum Steuern eines Empfängers (100) gemäß einem der Ansprüche 1 bis 8, mit:
einem Speicher (9) mit einem ersten Register (91 - 94), in welchem ein erster Satz von Empfängersteuerparameterwerten für den Empfänger (100) gespeichert werden können, und einem zweiten Register (91 - 94), in welchem ein zweiter Satz von Empfängersteuerparameterwerten für den Empfänger (100) gespeichert werden können;
mindestens einem Steuerausgang, der an einen Steuereingang (103) des Empfängers (100) anschließbar ist, um eine Verbindung (104) zu bilden, die ein ausgewähltes Register (91) an den Steuereingang (103) anschließt, über welche mindestens ein Empfängerparameter des Empfängers (100) entsprechend einem in dem ausgewählten Register (91) gespeicherten Wert festgelegt werden kann;
einen Schalter (8), der zwischen dem Steuereingang (103) und den Registern (91 - 94) schaltbar ist, zum Umschalten der Verbindung (104) von dem ausgewählten Register (91) auf ein anderes Register (92 - 94); und
einen Controller (6,65), der an den Schalter (8) anschließbar ist, zum Auswählen eines Satzes und Steuern des Schalters (8), so dass dieser die Verbindung (104) auf ein dem ausgewählten Satz entsprechendes Register (91 - 94) umschaltet.

## Revendications

1. Récepteur (100) pour recevoir au moins deux types de signaux dans une application de connectivité à courte portée, comportant :
une entrée de récepteur (101) pour recevoir un signal d'entrée de récepteur ;
un convertisseur de signal (2) relié par une entrée de convertisseur (21) à ladite entrée de récepteur (101), pour convertir ledit signal d'entrée de récepteur en un signal de sortie de récepteur ;
une sortie de récepteur (102) reliée à une sortie de convertisseur (22) du convertisseur de signal (2), pour délivrer ledit signal de sortie de récepteur à un processeur de signal (7) ;
au moins une entrée de contrôle (103) pour contrôler au moins un paramètre contrôlable du récepteur (100) ;
**caractérisé en ce que**
ledit récepteur (100) comporte en outre :
une mémoire (9) comprenant :
un premier registre (91-94) dans lequel un premier ensemble de valeurs de paramètres de contrôle de récepteur dudit récepteur (100) est mémorisé et
un second registre (91-94) dans lequel un second ensemble de valeurs de paramètres de contrôle de récepteur pour ledit récepteur (100) est mémorisé ;
ledit récepteur (100) pouvant recevoir un type sélectionné de signaux lorsque ledit récepteur (100) est déterminé conformément à un ensemble sélectionné ;
une connexion (104) reliant un registre sélectionné (91) à ladite au moins une entrée de contrôle (103), pour déterminer les paramètres de récepteur dudit récepteur (100) pour recevoir les valeurs de paramètres de contrôle mémorisés dans ledit registre sélectionné (91) ;
un commutateur (8) entre ladite entrée de contrôle (103) et lesdits registres (91-94), pour commuter la connexion (104) dudit registre sélectionné (91) à un autre registre (92-94) ; et
un contrôleur (6, 65) relié audit commutateur (8) pour, sans contrôler le processeur de signal, sélectionner un ensemble et contrôler ledit commutateur (8) pour commuter ladite connexion (104) sur un registre (91-94) correspondant à l'ensemble sélectionné.

2. Récepteur (100) selon la revendication 1, dans lequel ledit convertisseur de signal (2) est agencé pour convertir ledit signal d'entrée de récepteur en un signal de sortie de récepteur approprié pour être traité par un type sélectionné de processeur de signal (7), et, dans lequel, facultativement, ledit convertisseur de signal (2) comprend l'un ou plusieurs du groupe constitué par : un amplificateur (3), un démodulateur (4), un filtre (5).

3. Récepteur (100) selon l'une quelconque des revendications précédentes, comportant en outre une horloge (10) pour commuter périodiquement au moins une partie du récepteur (100) d'un état actif à un état inactif ou vice versa.

4. Récepteur (100) selon l'une quelconque des revendications précédentes, dans lequel ledit contrôleur (6, 65) est agencé pour contrôler ledit commutateur (8) pour commuter périodiquement ladite connexion (104) d'un registre présentement sélectionné (91-94) à un autre registre, non sélectionné, (91-94).

5. Récepteur (100) selon l'une quelconque des revendications précédentes, comportant en outre un détecteur de signal (66) relié audit convertisseur de signal (2), pour détecter la présence de signaux du type sélectionné.

6. Récepteur (100) selon la revendication 5, dans lequel ledit détecteur de signal (66) peut être relié au processeur de signal (7), pour commuter ledit processeur de signal (7), et facultativement au moins une partie du récepteur (100), d'un état inactif à un état actif lorsque ladite présence des signaux du type sélectionné est détectée.

7. Récepteur (100) selon l'une quelconque des revendications précédentes, dans lequel lesdits au moins deux ensembles comprennent un premier ensemble de valeurs de paramètres de contrôle de récepteur appropriées pour des signaux provenant d'un premier type de source (11), et un second ensemble de valeurs de paramètres de contrôle de récepteur appropriées pour des signaux provenant d'un second type de source (14).

8. Récepteur (100) selon l'une quelconque des revendications précédentes, dans lequel lesdits au moins deux ensembles comprennent un premier ensemble de valeurs de paramètres de contrôle de récepteur appropriées pour des signaux provenant d'un type de source (11) dans une première bande de fréquences (f₁) et un second ensemble de valeurs de paramètres de contrôle de récepteur appropriées pour des signaux provenant du même type de source (11) dans une seconde bande de fréquences (f₂).

9. Système de communication de données (200) comprenant au moins deux canaux de données (201-202) et un récepteur (100) selon l'une quelconque des revendications précédentes, lequel récepteur (100) est relié auxdits canaux de données (201-203).

10. Système de communication de données (200) selon la revendication 9, comprenant en outre un processeur de signal (7) relié à la sortie de récepteur (102), pour traiter des signaux provenant d'un canal de données sélectionné parmi lesdits au moins deux canaux de données (201-203).

11. Système de communication de données (200) selon l'une quelconque des revendications 9-10, dans lequel lesdits canaux de données (201-203) comprennent :
un premier canal de commande de verrouillage à distance de portières de véhicule (201) pour un premier type de signal provenant d'une commande à distance de verrouillage de portières de véhicule ; et
un second canal de commande de verrouillage à distance de portières de véhicule (202) pour un second type de signal provenant de ladite commande de verrouillage à distance de portières de véhicule.

12. Système de communication de données (200) selon l'une quelconque des revendications 9 ou 11, dans lequel lesdits au moins deux canaux de données (201-203) comprennent un canal de commande de verrouillage à distance de portières de véhicule (201, 202) et un canal de commande de pression des pneus (203).

13. Véhicule (300) muni d'un système de communication de données (200) selon l'une quelconque des revendications 9-12.

14. Kit pour contrôler un récepteur (100) selon l'une quelconque des revendications 1-8, comportant :
une mémoire (9) avec un premier registre (91-94) dans lequel un premier ensemble de valeurs de paramètres de contrôle de récepteur pour ledit récepteur (100) peut être mémorisé et un second registre (91-94) dans lequel un second ensemble de valeurs de paramètres de contrôle de récepteur pour ledit récepteur (100) peut être mémorisé ;
au moins une sortie de contrôle pouvant être reliée à une entrée de contrôle (103) du récepteur (100), pour former une connexion (104) reliant un registre sélectionné (91) à ladite entrée de contrôle (103) par l'intermédiaire de laquelle au moins un paramètre de récepteur dudit récepteur (100) peut être déterminé par rapport à une valeur mémorisée dans ledit registre sélectionné (91) ;
un commutateur (8) pouvant être relié entre ladite entrée de contrôle (103) et lesdits registres (91-94), pour commuter la connexion (104) dudit registre sélectionné (91) à un autre registre (92-94) ; et
un contrôleur (6, 65) pouvant être relié audit commutateur (8) pour sélectionner un ensemble et contrôler ledit commutateur (8) pour commuter ladite connexion (104) à un registre (91-94) correspondant à l'ensemble sélectionné.
